(19) **Europäisches Patentamt / European Patent Office / Office européen des brevets**

(11) **EP 3 691 113 B1**

(12) **EUROPEAN PATENT SPECIFICATION**

(45) Date of publication and mention
of the grant of the patent:
**09.11.2022 Bulletin 2022/45**

(21) Application number: **17926991.5**

(22) Date of filing: **26.09.2017**

(51) International Patent Classification (IPC):
**H02P 29/00** (2016.01)     **F02D 45/00** (2006.01)
**F02D 41/24** (2006.01)     **F02D 41/14** (2006.01)
**H02P 23/00** (2016.01)     **H02P 23/14** (2006.01)

(52) Cooperative Patent Classification (CPC):
**F02D 41/2451; H02P 23/0018; H02P 23/14;**
F02D 2041/1433

(86) International application number:
**PCT/JP2017/034622**

(87) International publication number:
**WO 2019/064322 (04.04.2019 Gazette 2019/14)**

(54) **APPARATUS CONTROL SYSTEM**

VORRICHTUNGSSTEUERUNGSSYSTEM

SYSTÈME DE COMMANDE D'APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2020 Bulletin 2020/32**

(73) Proprietor: **Hitachi, Ltd.**
**Tokyo 100-8280 (JP)**

(72) Inventors:
- **DEGUCHI, Kenta**
  **Tokyo 100-8280 (JP)**
- **NAKAMURA, Akihiro**
  **Tokyo 100-8280 (JP)**
- **HORI, Masahiro**
  **Tokyo 100-8280 (JP)**
- **AOYAMA, Yasuaki**
  **Tokyo 100-8280 (JP)**
- **KANEKO, Satoru**
  **Tokyo 100-8280 (JP)**
- **IWAJI, Yoshitaka**
  **Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A1- 1 790 838     EP-A2- 3 018 819
JP-A- H07 177 782     JP-A- H07 197 836
JP-A- 2006 513 685     JP-A- 2008 144 744
JP-A- 2014 206 795     US-A1- 2014 093 350

## Description

Technical Field

The present invention relates to an apparatus control system.

Background Art

A motor control system that is a form of an apparatus control system for controlling an apparatus is widely applied to an industrial apparatus, such as a pump and an air compressor and a transportation machine, such as an electric automobile and a rail vehicle.

To improve the productivity and to reduce the power consumption in these applications, it is important to optimally drive the motor according to a state of the industrial apparatus or the transportation machine. As means for solving this problem, the following proposals are made in Patent Literatures 1 and 2.

For example, the abstract of Patent Literature 1 describes that "A controller for controlling an air conditioning system is provided with a correction unit (11) which feeds back, to an estimation model (14a), an actual measurement value of a power consumption amount of an air conditioning device when the air conditioning device is controlled according to an operation amount of a decision unit (14) and corrects a power consumption value of the estimation model (14a) so that it is close to the actual measurement value.", and paragraph 0040 in the literature describes that "The correction unit (11) compares a power consumption amount of the air conditioning device (5) estimated by the estimation model (14a) with an actual measurement value of a power consumption amount measured by the wattmeter (17). And, the correction unit (11) performs a correction operation for correcting the estimation model (14a) so that the power consumption amount estimated by the estimation model (14a) is close to the actual measurement value.".

Also, the abstract of Patent Literature 2 describes that "Provided is a control device including an actual machine which has a motor control unit for driving a motor and a mechanism unit, a simulation unit which has a motor model in which the motor is simulated, a mechanism model in which the mechanism unit is simulated, and a control model in which the motor control unit is simulated, a presentation unit which presents, to an operator, the comparison result of identical state amounts of the actual machine and the simulation unit, and a model parameter change unit in which the operator changes a parameter of the mechanism model.".

Patent Literature 3 describes an apparatus and a method for controlling the rotation speed of a direct-current motor armature. Further, the apparatus and the method of Patent Literature 3 includes an adjustable power supply, by measuring a D.C. motor's armature voltage and current. In detail, the apparatus and the method of Patent Literature3 is measuring the rotation speed of the direct-current motor armature, using a Hall-effect sensor, which enables a particular motor's characteristic equation to be determined empirically. Patent Literature 4 describes a gas turbine engine including a compressor, a combustor, a turbine, and an electronic engine control system. Patent Literature 5 describes a method of estimating quality parameters for a plurality of engine components of a gas turbine engine.

Citation List

Patent Literature

Patent Literature 1: Japanese Unexamined Patent Application Publication No. 2010-243002
Patent Literature 2: Japanese Unexamined Patent Application Publication No. 2006-340480
Patent Literature 3: EP 3 018 819 A2
Patent Literature 4: US 2014/093350 A1
Patent Literature 5: EP 1 790 838 A1

Summary of Invention

Technical Problem

However, in Patent Literatures 1 and 2, the motor is controlled on the basis of the estimation model initially set to the motor control device, and the estimation model of the motor is updated on the basis of only the power consumption of the motor, and even when for example, characteristics of the motor have changed although power consumption has not changed (for example, an output of the motor is deteriorated due to aging deterioration), the apparatus, such as the industrial apparatus and the transportation machine, driven by the motor is aging deteriorated, and a load of the apparatus is replaced, the estimation model having a close characteristic among the existing estimation models is approximately used, with the result that there is a problem that it is difficult to drive the motor in an optimal condition for the power source of the industrial apparatus, the transportation machine, and the like.

Accordingly, an object of the present invention is to provide an apparatus control system which updates an estimation model of a motor on the basis of an output of an industrial apparatus, a transportation machine, and the like, to be finally controlled, thereby being capable of configuring an optimal motor estimation model according to the aging deterioration of the motor, the aging deterioration of the industrial apparatus, the transportation machine, and the like, and the change in load, and controls the motor and the like on the basis of it, thereby being capable of maximizing an efficiency of the industrial apparatus and of maximizing the energy saving of the transportation machine.

The above object is achieved according to the features of the independent claim. The dependent claims relate to advantageous embodiments of the invention.

Solution to Problem

An apparatus control system of the present invention is provided with a motor for driving an apparatus, a motor control device which holds a calculation model of the motor and generates a control command of the motor on the basis of the calculation model, and a calculation device which updates the calculation model of the motor which is held by the motor control device. The calculation device is provided with an estimation unit which estimates an actual state of the motor or the apparatus on the basis of state information on the apparatus, and an update unit which updates the calculation model held by the motor control device on the basis of the estimation result from the estimation unit.

Advantageous Effects of Invention

According to the present invention, even when characteristics of the motor have changed due to aging deterioration and the like, and even when the aging deterioration of the apparatus, such as the industrial apparatus and the transportation machine, driven by the motor and the replacement of the load are caused, the motor can be driven in an optimal condition for the power source of the industrial apparatus, the transportation machine, and the like by optimizing the estimation model in the motor control device.

Brief Description of Drawings

Fig. 1 is a block diagram of an apparatus control system according to a first embodiment;
Fig. 2 is a block diagram of an apparatus state estimation unit and an update unit according to the first embodiment;
Fig. 3 is a specific example of the update of a calculation model according to the first embodiment;
Fig. 4 is a block diagram of the apparatus control system according to a second embodiment;
Fig. 5 is a block diagram according to a third embodiment in which the present invention is applied to a fluid machine;
Fig. 6 is a block diagram according to a fourth embodiment in which the present invention is applied to the driving of a vehicle;
Fig. 7 is a block diagram according to a fifth embodiment in which the present invention is applied to a lifting machine;
Fig. 8 is a block diagram according to a sixth embodiment in which the present invention is applied to a machine tool; and
Fig. 9 is a block diagram according to a seventh embodiment in which the present invention is applied to an injection molding machine.

Description of Embodiments

Embodiments of the present invention will be described below with reference to the drawings.

First Embodiment

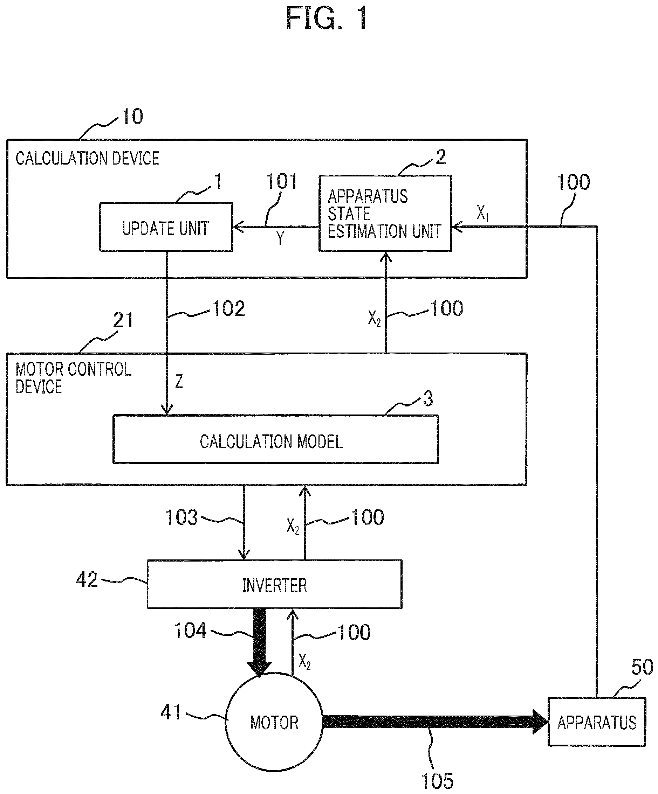

Fig. 1 illustrates a function block diagram of an apparatus control system according to a first embodiment. As illustrated here, the apparatus control system of this embodiment is a system which is provided with a motor 41 as a power source for generating a machine energy 105 and controls this to allow an apparatus 50, such as an industrial apparatus and a transportation machine, to execute a desired operation, and is provided with, in addition to the motor 41 and the apparatus 50, a calculation device 10, a motor control device 21, and an inverter 42. It should be noted that an industrial system network and the like are used for the communication between the apparatus 50 and the calculation device 10. Also, here, the configuration using the motor 41 is illustrated, but an engine may be used as the power source, and in that case, in place of the motor control device 21 and the inverter 42, an engine control device is used.

The motor control device 21 for controlling the motor 41 holds a calculation model 3 which estimates an apparatus operation when a predetermined input is given, uses this to calculate an electric power energy 104 inputted to the motor 41 when the apparatus 50 is allowed to execute the desired operation, and outputs a control command 103 corresponding to the electric power energy to the inverter 42. The inverter 42 controls the motor 41 by the electric power energy 104 according to the control command 103, so that the apparatus 50 is given the appropriate machine energy 105 to execute the desired operation.

Here, the calculation model 3 which assumes a standard state of the apparatus 50 or the motor 41 is originally stored in the motor control device 21, but when aging deterioration has been caused in the apparatus 50 or the motor 41 and a load of the apparatus 50 has changed, a deviation occurs in the relationship between an output of the motor 41 and an output of the apparatus 50, with the result that even when the electric power energy 104 calculated by the calculation model 3 is given to the motor 41, the case where the operation of the apparatus 50 is not desired is caused.

Accordingly, in this embodiment, it is determined, on the basis of state information 100 actually detected by the apparatus 50 or the motor 41, whether or not the current calculation model 3 can be continuously used, and before the deviation between an estimation result from the current calculation model 3 and an actual output of the apparatus 50 or the motor 41 becomes larger, the calculation model 3 can be updated. In this way, the calculation model 3 in the motor control device 21 is updated according to an update command 102 generated by the calculation device 10, so that even when the aging deterioration has been caused in the motor 41 or the apparatus 50 and the load handled by the apparatus 50 has changed, the optimal control command 103 can be outputted to the inverter 42, and the apparatus 50 can thus be allowed to execute the desired operation at all times.

To achieve this, the calculation device 10 of this embodiment has an apparatus state estimation unit 2 which estimates an actual state of the relationship between the apparatus 50 and the motor 41 on the basis of the state information 100, and an update unit 1 which updates the calculation model 3 in the motor control device 21 on the basis of an estimation result 101 which is an output of the apparatus state estimation unit 2. It should be noted that it is considered that as the calculation device 10, for example, a small computer, such as a programmable logic controller, and the like are used.

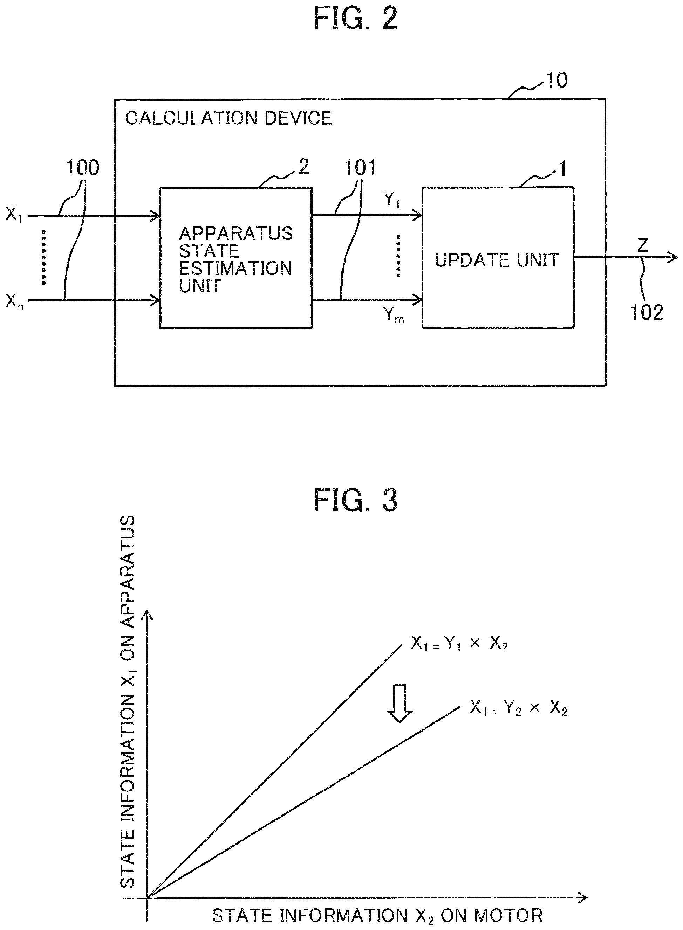

Next, the apparatus state estimation unit 2 and the update unit 1 of the calculation device 10 will be described in detail with reference to Fig. 2.

The apparatus state estimation unit 2 estimates an actual state of the apparatus 50 or the motor 41 on the basis of time series data of a plurality of state information 100 inputted from the apparatus 50 ($X_1$, $X_2$, ..., $X_n$), and outputs the estimation results 101 representing the actual state of the apparatus 50 ($Y_1$, $Y_2$, ..., $Y_m$). Here, the state information $X_1$ on the apparatus 50 is for example, a flow rate when the apparatus 50 is a fluid machine, a speed when the apparatus 50 is a vehicle or a lifting machine, and a shift and the like when the apparatus 50 is a machine tool, and the state information $X_2$ on the motor 41 is for example, mechanical information observed by the motor 41 (a torque, a rotation speed, vibration, and the like) and electric information (an electric current value, a voltage value, an electric current phase, a voltage phase, and the like), and for example, when a proportion relationship is established between the state information $X_2$ on the motor 41 and the state information $X_1$ on the apparatus 50, the estimation result 101 is a tilt and the like representing the relationship between them.

It should be noted that the apparatus state estimation unit 2 may estimate, on the basis of the state information 100, a continuous state of the apparatus using a mathematical equation (for example, the number of days until the next maintenance planning date of the apparatus 50) and a discrete state using threshold value comparison and clustering (for example, "0" when the apparatus 50 is not required to be maintained, and "1" when the apparatus 50 is required to be maintained).

The update unit 1 determines, on the basis of the estimation result 101, whether the current calculation model 3 in the motor control device 21 is optimal, calculates an optimal calculation model in the update unit 1 when the calculation model 3 in the motor control device 21 is not optimal, and outputs the update command 102 to the calculation model 3 in the motor control device 21 on the basis of the calculation result.

Here, an example of the calculation model 3 will be described with reference to Fig. 3. For example, when the initial calculation model 3 in the motor control device 21 is Equation 1, the relationship of Equation 1 is established also between the state information $X_1$ actually measured by the apparatus 50 and the state information $X_2$ actually measured by the motor 41 before the aging deterioration, so that the motor control device 21 calculates the state information $X_2$ on the motor 41 corresponding to the state information $X_1$ on the apparatus 50 on the basis of Equation 2 obtained by transforming Equation 1, outputs the control command 103 corresponding to the state information $X_2$, and can thus allow the apparatus 50 to execute the desired operation.

$$X_1 = Y_1 \times X_2 \ \dots \ \text{(Equation 1)}$$

$$X_2 = X_1 / Y_1 \ \dots \ \text{(Equation 2)}$$

However, after the aging deterioration and the like have been caused, there is the case where the relationship between the state information $X_1$ and the state information $X_2$, which are actually measured is changed to Equation 3.

$$X_1 = Y_2 \times X_2 \ \dots \ \text{(Equation 3)}$$

In such a case, when the control command 103 is generated on the basis of the calculation model 3 of Equation 1, the apparatus 50 cannot be allowed to execute the desired operation, so that in order that the control command 103 can be generated on the basis of the calculation model 3 of Equation 2, the control command 103 which updates the calculation model 3 is given to the motor control device 21. It should be noted that in the case where the frequent update of the calculation model 3 is desired to be avoided, the calculation model 3 may be updated when the difference between $Y_1$ and $Y_2$ exceeds the predetermined threshold value.

According to the configuration described above, a driving device 40 is driven on the basis of the existing calculation model 3 in the motor control device 21 in the conventional art, whereas when the present invention is used, the calculation model 3 itself in the motor control device 21 is rewritten according to an actual state of the apparatus 50 or the motor 41, so that the apparatus 50 can be driven in an optimal driving state at all times even when a driving state of the apparatus 50 has changed.

It should be noted that the estimation method of the apparatus state estimation unit 2 is not limited to the above mathematical equations, threshold comparison, and clustering, and the optimal estimation method may be selected according to contents of the state information 100.

Second Embodiment

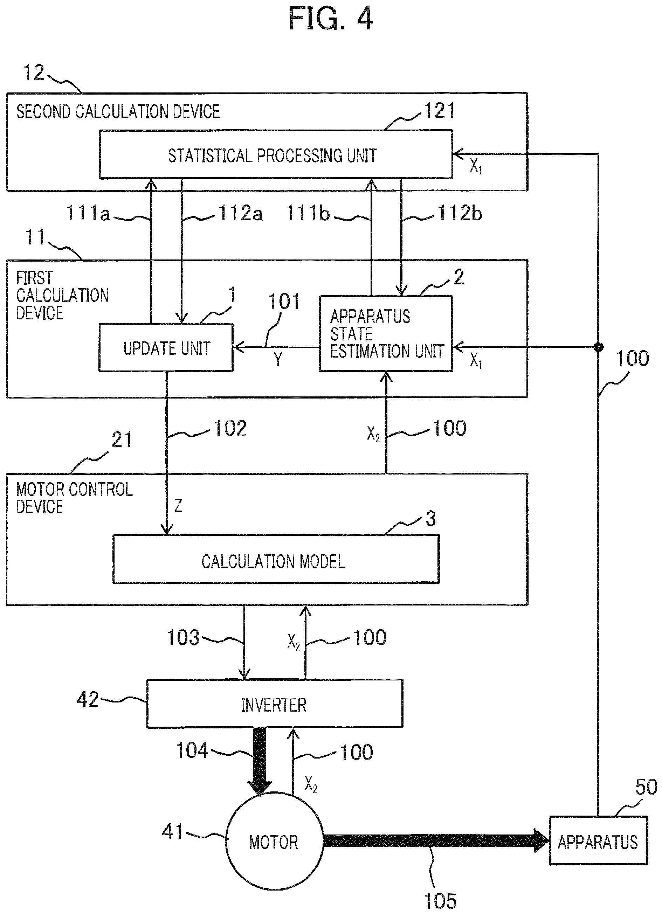

Fig. 4 illustrates a block diagram representing a configuration of the apparatus control system of a second embodiment. As illustrated in the drawing, the apparatus control system of this embodiment has, in addition to a first calculation device 11 corresponding to the calculation device 10 of the first embodiment, a second calculation device 12. And, the second calculation device 12 includes a statistical processing unit 121 which updates both of a calculation model in the apparatus state estimation unit 2 in the first calculation device 11 (a calculation model for outputting the estimation result 101 of an apparatus state on the basis of the state information 100) and a calculation model in the update unit 1 in the first calculation device 11 (a calculation model for optimizing the calculation model 3 in the motor control device 21 on the basis of the estimation result 101).

The update of the calculation model in the apparatus state estimation unit 2 and the calculation model in the update unit 1 will be described below with reference to Fig. 4. It should be noted that it is considered that for the second calculation device 12, a server, such as a large computer, located in a host system, such as the cloud, is used, and it is considered that an information system network, such as the Internet, is used for the communication between the first calculation device 11 and the second calculation device 12.

As described above, the apparatus state estimation unit 2 performs, on the basis of the state information 100 inputted, calculation for estimating an actual state of the apparatus by the calculation model (the mathematical equations, the threshold value comparison, and the like), and outputs the estimation result 101 of the apparatus state. However, when the calculation model in the apparatus state estimation unit 2 is fixed, an error of the actual state of the apparatus 50 of the estimation result 101 becomes larger when characteristics of the apparatus 50 or the driving device 40 have greatly changed due to long period deterioration and the like.

Accordingly, the long period deterioration state of the apparatus 50 is calculated by the statistical processing unit 121 in the second calculation device 12 that is the host system, current calculation model information 111b of the apparatus state estimation unit 2 and an estimation unit calculation model calculated by the statistical processing unit 121 are compared with each other, and when the result calculated by the statistical processing unit 121 is optimal, the calculation model in the apparatus state estimation unit 2 is updated by calculation model update information 112b of the apparatus state estimation unit. With this, since the apparatus state estimation unit 2 can output the estimation result 101 on the basis of the newest calculation model at all times, the error caused between the estimation result and the actual state can be made minimum at all times.

This is ditto for the update unit 1, and when the calculation model in the update unit 1 is fixed, there is a fear that the calculation model 3 in the motor control device 21 calculated on the basis of the estimation result 101 is brought into a non-optimal state due to characteristic change of the apparatus 50 or the driving device 40. Accordingly, current calculation model information 111a of the update unit 1 and the update unit calculation model calculated by the statistical processing unit 121 are compared with each other, and when the result calculated by the statistical processing unit 121 is optimal, the calculation model in the update unit 1 is updated by calculation model update information 112a of the update unit. With this, update to the calculation model considering the influence of the long period deterioration and the like is enabled, so that the calculation model 3 in the motor control device 21 can be updated to be optimal without being affected by the characteristic change of the apparatus 50 or the driving device 40.

It should be noted that the relationship of t1 < t2 is present between a calculation period t2 of the second calculation device 12 described in this embodiment and a calculation period t1 of the first calculation device 11 described in this embodiment, and the relationship of v1 < v2 is present between a data amount v2 accumulated to be used in the calculation of the second calculation device 12 and a data amount v1 accumulated to be used in the calculation of the first calculation device 11. That is, this means that calculation having a high load on the basis of the characteristic change for a longer period than the second calculation device 12 (for example, the characteristic change due to a using environment, such as a season and weather, and the characteristic change due to the aging deterioration) is performed, and the first calculation device 11 performs calculation having a low load on the basis of the more real-time characteristic change (for example, variation for each manufacturing, and the influence of other manufacturing equipment in the same manufacturing line).

According to the configuration described above, the calculation in which the calculation periods and the calculation loads are different is distributively performed on the first calculation device 11 and the second calculation device 12, so that it is possible to make maximum use of a calculation capability of each of the calculation devices, and each of the calculation devices and the apparatus system can be prevented from being larger.

Third Embodiment

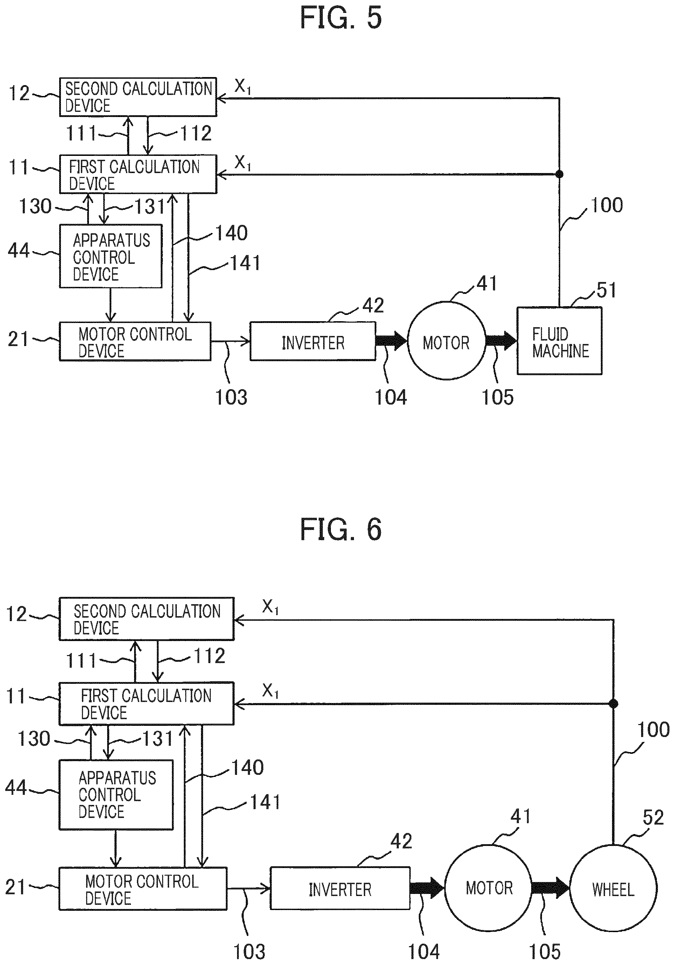

Fig. 5 illustrates a block diagram representing a system configuration of a third embodiment in which the apparatus control system of the present invention is applied to a fluid machine. Examples of the fluid machine illustrated in the drawing include a machine, such as a pump, handling a liquid, a machine, such as a compressor and a fan, handling a gas, a machine, such as a turbine, handling a steam, and the like. Also, the configurations of the first calculation device 11 and the second calculation device 12 in the drawing are the same as the configurations described in the second embodiment, and the description thereof is omitted.

The conventional fluid machine system includes a fluid machine 51, the motor 41 for driving the fluid machine 51, the inverter 42 for driving the motor 41, the motor control device 21 for controlling an output electric power energy of the inverter, and an apparatus control device 44 for giving a command to the motor control device 21 to control a driving state of the fluid machine 51.

In this embodiment, in addition to the conventional configuration, the apparatus control system has the first calculation device 11 for updating the calculation models 3 in the motor control device 21 and the apparatus control device 44 on the basis of the state information 100 on the fluid machine 51, and the second calculation device 12 for updating the calculation models in the apparatus state estimation unit 2 and the update unit 1 in the first calculation device 11 on the basis of the state information 100 on the fluid machine 51.

Current calculation model information 111 of the first calculation device (the calculation model in the apparatus state estimation unit 2, the calculation model in the update unit, and the like) and the state information 100 on the fluid machine 51 are inputted to the second calculation device 12, and on the basis of the inputted information (the state information 100 and the current calculation model information 111), whether the models in the apparatus state estimation unit 2 and the update unit in the second calculation device 12 are optimal is calculated. When the models are not optimal, the calculation model in the first calculation device 11 is updated by calculation model update information 112.

The first calculation device estimates a state of the fluid machine 51 on the basis of the inputted state information 100 on the fluid machine 51, and calculates the optimal calculation models 3 in the apparatus control device 44 and the motor control device 21. Current calculation models (130 and 140) and the optimal calculation models calculated on the first calculation device are compared with each other, and when the respective calculation models are required to be updated, the respective calculation models are updated by using calculation model update information 131 of the apparatus control device 44 and calculation model update information 141 of the motor control device 21.

In the case of the fluid machine system described in this embodiment, examples of the state information 100 outputted from the fluid machine 51 include, for example, a suction amount, a discharge amount, a suction pressure, a discharge pressure, and the like of a fluid.

According to this embodiment described above, the fluid machine system can be driven in an optimal state at all times in consideration of the influence of the long period characteristic change of the fluid machine 51 (the characteristic change due to a using environment, the characteristic change due to the long period deterioration, and the like) and the real-time characteristic change (for example, variation for each manufacturing, and the relationship with other manufacturing equipment in the same manufacturing line).

Fourth Embodiment

Fig. 6 illustrates a block diagram representing a system configuration of a fourth embodiment in which the apparatus control system of the present invention is applied to the driving of a vehicle. Examples of the wheel illustrated in the drawing include wheels of a rail vehicle, an automobile vehicle, a constructing vehicle, an agriculture vehicle, and the like. Other system configurations and effects are the same as the third embodiment, and the description thereof is omitted.

As illustrated in the drawing, in the configuration of this embodiment, calculation is performed on the first calculation device 11 and the second calculation device 12 on the basis of the state information 100 on a wheel 52 of the vehicle. Examples of the state information 100 outputted from the wheel 52 of the vehicle include, for example, a wheel rotation speed, a vehicle speed, information on a road surface on which the vehicle runs, and the like.

According to the embodiment described above, the calculation is performed on the basis of the information on the wheel 52, so that the vehicle can be driven in an optimal state at all times in consideration of the influence of the long period characteristic change of the vehicle (the characteristic change due to a running environment, the characteristic change due to the long period deterioration, and the like) and the real-time characteristic change (for example, variation for each running, and a state of the road surface).

Fifth Embodiment

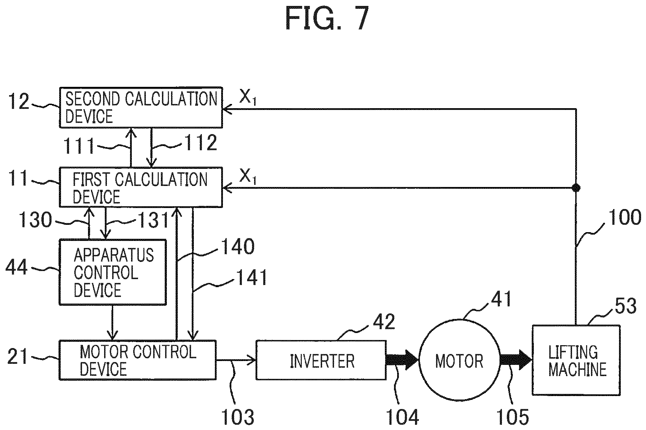

Fig. 7 illustrates a block diagram representing a system configuration of a fifth embodiment in which the apparatus control system of the present invention is applied to a lifting machine. Examples of the lifting machine illustrated in the drawing include an elevator, an escalator, a hoist, and the like. Other system configurations and effects are the same as the third embodiment, and the description thereof is omitted.

As illustrated in the drawing, in the configuration of this embodiment, calculation is performed on the first calculation device 11 and the second calculation device 12 on the basis of the state information 100 on the lifting machine 53. Examples of the state information 100 outputted from the lifting machine 53 include, for example, a load for conveyance, a speed, position information, noise, vibration, information on an inspection and maintenance state, and the like.

According to the embodiment described above, the calculation is performed on the basis of the information on the lifting machine 53, so that the lifting machine 53 can be driven in an optimal state at all times in consideration of the influence of the long period characteristic change of the lifting machine 53 (the characteristic change due to a conveying environment, the characteristic change due to the long period deterioration, and the like) and the real-time characteristic change (for example, variation for each conveyance, and the difference in load).

Sixth Embodiment

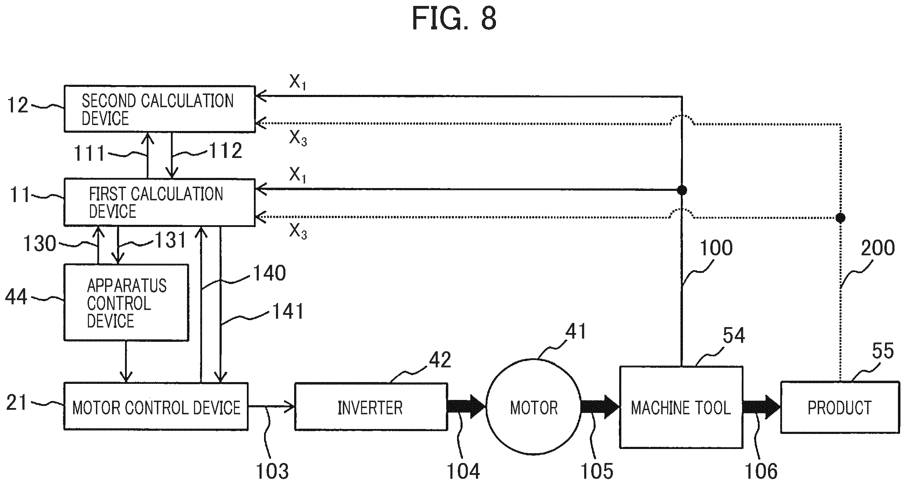

Fig. 8 illustrates a block diagram representing a system configuration when the apparatus control system of the present invention is applied to a machine tool. Examples of the machine tool illustrated in the drawing include a turning machine, a drilling machine, a milling machine, a grinding machine, a machining center and a turning center made by combining these, and the like. Besides, examples of the machine tool include a processing machine using electric discharge, laser, water jet, and the like. Other system configurations and effects are the same as the third embodiment, and the description thereof is omitted.

As illustrated in the drawing, in the configuration of this embodiment, calculation is performed on the first calculation device 11 and the second calculation device 12 on the basis of the state information 100 on a machine tool 54 and state information $X_3$ (200) representing the quality of a product 55 that is subject to processing treatment 106 by the machine tool 54. Examples of the state information 100 outputted from the machine tool 54 include, for example, a processing condition, the type of a processing material, an NC command code, tool chatter (vibration and noise), the type and amount of a lubricating material, and the like. Also, examples of the state information 200 detected from the product 55 include, for example, information on the burr of a processed item, surface roughness, and clogging, and the like.

According to the embodiment described above, the calculation is performed on the basis of the information on the machine tool 54, so that the machine tool 54 can be driven in an optimal state at all times in consideration of the influence of the long period characteristic change of the machine tool 54 (the characteristic change due to a processing environment, the characteristic change due to the long period deterioration, and the like) and the real-time characteristic change (for example, variation in processing). Besides, the calculation is performed on the basis of the state information 200 on the product 55, so that change to an optimal processing condition of the machine tool 54 can be automatically made, which can contribute to the improvement in productivity and the improvement in yield.

Seventh Embodiment

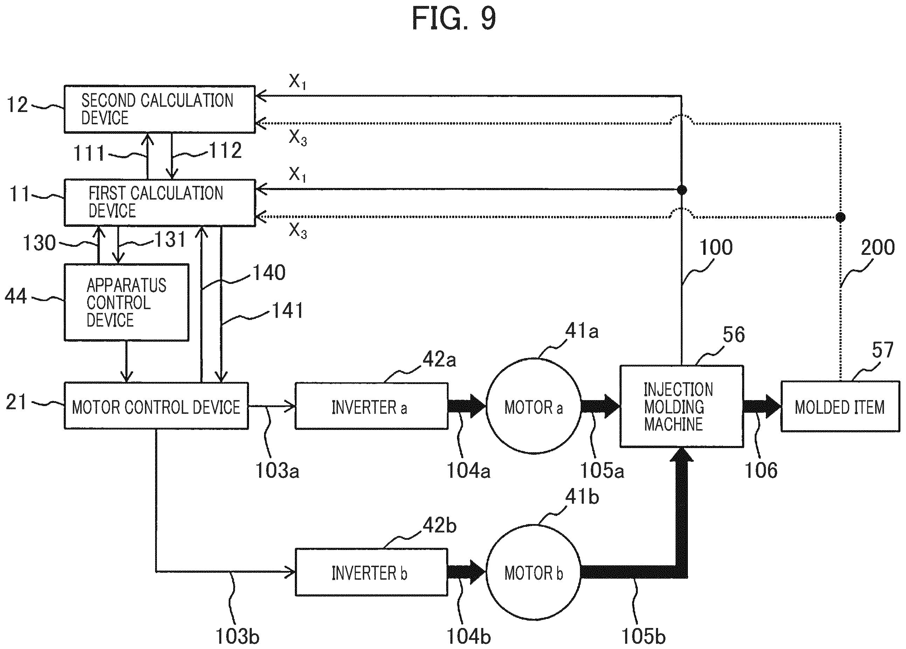

Fig. 9 illustrates a block diagram representing a system configuration of a seventh embodiment in which the apparatus control system of the present invention is applied to an injection molding machine. As illustrated in the drawing, an injection molding machine 56 has a plurality of motors (41a and 41b), and inverters (42a and 42b) for driving the respective motors . Examples of the motor include, for example, a weighing motor for weighing a material, an injection motor for injecting the material, a mold clamping motor for opening and closing a die, and the like. Other system configurations and effects are the same as the third embodiment, and the description thereof is omitted.

As illustrated in the drawing, in the configuration of this embodiment, calculation is performed on the first calculation device 11 and the second calculation device 12 on the basis of the state information 100 on the injection molding machine 56 and the state information $X_3$ (200) on a molded item 57 molded by the injection molding machine 56. Examples of the state information 100 outputted from the injection molding machine 56 include, for example, an injection speed, dwelling, dwelling time, cooling time, a weighing result of the material, and the like. Also, examples of the state information 200 outputted from the molded item 57 include, for example, the burr of the molded item, a charging amount, a sink mark, a void, warp, deformation, a flow mark, and the like.

According to the embodiment described above, the calculation is performed on the basis of the information on the injection molding machine 56, so that the injection molding machine 56 can be driven in an optimal state at all times in consideration of the influence of the long period characteristic change of the injection molding machine 56 (the characteristic change due to a molding environment, the characteristic change due to the long period deterioration, and the like) and the real-time characteristic change (for example, variation in molding). Besides, the calculation is performed on the basis of the state information 200 on the product 55, so that change to molding condition of the injection molding machine 56 can be automatically made, which can contribute to the improvement in productivity and the improvement in yield.

List of Reference Signs

1 update unit, 2 apparatus state estimation unit, 3 calculation model, 10 calculation device, 11 first calculation device, 12 second calculation device, 21 motor control device, 40 driving device, 41 motor, 42 inverter, 44 apparatus control device, 50 apparatus, 51 fluid machine, 52 wheel, 53 lifting machine, 54 machine tool, 55 product, 56 injection molding machine, 57 molded item, 100, 200, $X_1$, $X_2$, $X_3$ state information, 101 estimation result, 102 update command, 103 control command, 104 electric power energy, 105 machine energy, 106 processing treatment, 111 current calculation model information, 112 calculation model update information, 111a current calculation model information of update unit, 111b current calculation model information of apparatus state estimation unit, 112a calculation model update information of update unit, 112b calculation model update information of apparatus state estimation unit, 121 statistical processing unit, 130 current calculation model information of apparatus control device, 131 calculation model update information of apparatus control device, 140 current calculation model information of motor control device, 141 calculation model update information of motor control device

**Claims**

1. An apparatus control system comprising:

    a motor (41) for driving an apparatus;
    a motor control device (21) which holds a calculation model (3) of the motor (41) and generates a control command of the motor (41) on the basis of the calculation model (3); and
    a calculation device (10) which updates the calculation model (3) of the motor (41) which is held by the motor control device (21), wherein the calculation device (10) includes:

        an estimation unit (2) which estimates an actual state of the motor (41) or the apparatus on the basis of state information (100, 200, X1, X2, X3) on the apparatus; and
        an update unit (1) which updates the calculation model (3) held by the motor control device (21) on the basis of the estimation result from the estimation unit (2);

    **characterized in that**
    the apparatus control system is further comprising:
    a statistical processing unit (121) which collects information of the estimation unit (2) and the update unit (1), performs calculation for updating a model in the estimation unit (2) and a model in the update unit (1) on the basis of the collected information, and updates the models in the estimation unit (2) and the calculation device (10).

2. The apparatus control system according to claim 1,

    wherein the estimation unit (2) and the update unit (1) are arranged in a first calculation device (11), and
    wherein the statistical processing unit (121) is arranged in a second calculation device (12).

3. The apparatus control system according to claim 2,

    wherein the relationship between a calculation period $t_1$ of the first calculation device (11) and a calculation period $t_2$ of the second calculation device (12) is $t_1 < t_2$,
    wherein the relationship between a data amount $v_1$ accumulated in the first calculation device (11) and a data amount $v_2$ accumulated in the second calculation device (12) is $v_1 < v_2$, and
    wherein a calculation capability of the second calculation device (12) is higher than a calculation capability of the first calculation device (11).

4. The apparatus control system according to claim 2, wherein a deterioration state of the apparatus is estimated on the basis of the data accumulated in the second calculation device (12), and on the basis of the estimated deterioration state, the models in the estimation unit (2) and the update unit (1) in the first calculation device (11) are calculated and updated.

5. The apparatus control system according to claim 2,

    wherein the first calculation device (11) includes a programmable logic controller, and
    wherein the second calculation device (12) is a server on the cloud.

6. The apparatus control system according to any one of claims 1 to 5,
    wherein the estimation unit (2) performs calculation on the basis of information on a sensor mounted in the apparatus, and estimates a state of the apparatus.

**Patentansprüche**

1. Vorrichtungssteuerungssystem, das Folgendes umfasst:

    einen Motor (41) zum Antreiben einer Vorrichtung;
    eine Motorsteuerungsvorrichtung (21), die ein Berechnungsmodell (3) des Motors (41) enthält und einen Steuerbefehl des Motors (41) auf der Basis des Berechnungsmodells (3) erzeugt; und
    eine Berechnungsvorrichtung (10), die das Berechnungsmodell (3) des Motors (41), das in der Motorsteuerungsvorrichtung (21) enthalten ist, aktualisiert,
    wobei die Berechnungsvorrichtung (10) Folgendes umfasst:

        eine Schätzeinheit (2), die einen tatsächlichen Zustand des Motors (41) oder der Vorrichtung auf der Basis der Statusinformationen (100, 200, X1, X2, X3) an der Vorrichtung abschätzt; und

eine Aktualisierungseinheit (1), die das Berechnungsmodell (3), das in der Motorsteuerungsvorrichtung (21) enthalten ist, auf der Basis des abgeschätzten Ergebnisses von der Schätzeinheit (2) aktualisiert; **dadurch gekennzeichnet, dass** das Vorrichtungssteuerungssystem ferner Folgendes umfasst: eine statistische Verarbeitungseinheit (121), die Informationen der Schätzeinheit (2) und der Aktualisierungseinheit (1) sammelt, eine Berechnung zum Aktualisieren eines Modells in der Schätzeinheit (2) und eines Modells in der Aktualisierungseinheit (1) auf der Basis der gesammelten Informationen durchführt und die Modelle in der Schätzeinheit (2) und der Berechnungsvorrichtung (10) aktualisiert.

2. Vorrichtungssteuerungssystem nach Anspruch 1,

wobei die Schätzeinheit (2) und die Aktualisierungseinheit (1) in einer ersten Berechnungsvorrichtung (11) angeordnet sind, und wobei die statistische Verarbeitungseinheit (121) in einer zweiten Berechnungsvorrichtung (12) angeordnet ist.

3. Vorrichtungssteuerungssystem nach Anspruch 2,

wobei für die Beziehung zwischen einer Berechnungszeit $t_1$ der ersten Berechnungsvorrichtung (11) und einer Berechnungszeit $t_2$ der zweiten Berechnungsvorrichtung (12) gilt: $t_1 < t_2$, wobei für die Beziehung zwischen einer Datenmenge $v_1$, die in der ersten Berechnungsvorrichtung (11) gesammelt wird, und einer Datenmenge $v_2$, die in der zweiten Berechnungsvorrichtung (12) gesammelt wird, gilt: $v_1 < v_2$, und wobei eine Rechenleistung der zweiten Berechnungsvorrichtung (12) höher als eine Rechenleistung der ersten Berechnungsvorrichtung (11) ist.

4. Vorrichtungssteuerungssystem nach Anspruch 2, wobei ein Verschleißzustand der Vorrichtung auf der Basis der Daten, die in der zweiten Berechnungsvorrichtung (12) gesammelt werden, abgeschätzt wird, und auf der Basis des abgeschätzten Verschleißzustands die Modelle in der Schätzeinheit (2) und der Aktualisierungseinheit (1) in der ersten Berechnungsvorrichtung (11) berechnet und aktualisiert werden.

5. Vorrichtungssteuerungssystem nach Anspruch 2,

wobei die erste Berechnungsvorrichtung (11) eine programmierbare Logiksteuerung umfasst, und wobei die zweite Berechnungsvorrichtung (12) ein Server in der Cloud ist.

6. Vorrichtungssteuerungssystem nach einem der Ansprüche 1 bis 5, wobei die Schätzeinheit (2) eine Berechnung auf der Basis von Informationen eines Sensors durchführt, der in der Vorrichtung montiert ist, und einen Zustand der Vorrichtung abschätzt.

**Revendications**

1. Système de commande d'appareil comprenant :

un moteur (41) destiné à entraîner un appareil ; un dispositif de commande de moteur (21) qui contient un modèle de calcul (3) du moteur (41) et qui génère un ordre de commande du moteur (41) sur la base du modèle de calcul (3) ; et un dispositif de calcul (10) qui met à jour le modèle de calcul (3) du moteur (41) qui est contenu par le dispositif de commande de moteur (21), dans lequel le dispositif de calcul (10) inclut :

une unité d'estimation (2) qui estime un état actuel du moteur (41) ou de l'appareil sur la base d'informations d'état (100, 200, X1, X2, X3) concernant l'appareil ; et une unité de mise à jour (1) qui met à jour le modèle de calcul (3) contenu par le dispositif de commande de moteur (21) sur la base du résultat d'estimation provenant de l'unité d'estimation (2) ; **caractérisé en ce que** le système de commande d'appareil comprend en outre : une unité de traitement statistique (121) qui collecte des informations de l'unité d'estimation (2) et de l'unité de mise à jour (1), effectue un calcul pour mettre à jour un modèle dans l'unité d'estimation (2) et un modèle dans l'unité de mise à jour (1) sur la base des informations collectées, et met à jour les modèles dans l'unité d'estimation (2) et le dispositif de calcul (10).

2. Système de commande d'appareil selon la revendication 1,

dans lequel l'unité d'estimation (2) et l'unité de mise à jour (1) sont agencées dans un premier dispositif de calcul (11), et dans lequel l'unité de traitement statistique (121) est agencée dans un second dispositif de calcul (12).

3. Système de commande d'appareil selon la revendication 2,

   dans lequel la relation entre une période de calcul $t_1$ du premier dispositif de calcul (11) et une période de calcul $t_2$ du second dispositif de calcul (12) est $t_1 < t2$,

   dans lequel la relation entre une quantité de données $v_1$ accumulées dans le premier dispositif de calcul (11) et une quantité de données $v_2$ accumulées dans le second dispositif de calcul (12) est $v1 < v2$, et

   dans lequel une capacité de calcul du second dispositif de calcul (12) est plus élevée qu'une capacité de calcul du premier dispositif de calcul (11).

4. Système de commande d'appareil selon la revendication 2,
   dans lequel un état de détérioration de l'appareil est estimé sur la base des données accumulées dans le second dispositif de calcul (12), et sur la base de l'état de détérioration estimé, les modèles dans l'unité d'estimation (2) et l'unité de mise à jour (1) dans le premier dispositif de calcul (11) sont calculés et mis à jour.

5. Système de commande d'appareil selon la revendication 2,

   dans lequel le premier dispositif de calcul (11) inclut un contrôleur logique programmable, et
   dans lequel le second dispositif de calcul (12) est un serveur sur le cloud.

6. Système de commande d'appareil selon l'une quelconque des revendications 1 à 5,
   dans lequel l'unité d'estimation (2) effectue un calcul sur la base des informations concernant un capteur monté dans l'appareil, et estime un état de l'appareil.

# FIG. 1

# FIG. 2

CALCULATION DEVICE 10

$X_1$

$X_n$

100

APPARATUS STATE ESTIMATION UNIT 2

101

$Y_1$

$Y_m$

UPDATE UNIT 1

Z

102

# FIG. 3

STATE INFORMATION $X_1$ ON APPARATUS

$X_1 = Y_1 \times X_2$

$X_1 = Y_2 \times X_2$

STATE INFORMATION $X_2$ ON MOTOR

# FIG. 4

# FIG. 5

12 — SECOND CALCULATION DEVICE $\quad X_1$

111 $\quad$ 112

11 — FIRST CALCULATION DEVICE $\quad X_1$

130 $\quad$ 131

140

44 — APPARATUS CONTROL DEVICE

141

21 — MOTOR CONTROL DEVICE

42

INVERTER

41

MOTOR

51

FLUID MACHINE

100

103 $\qquad$ 104 $\qquad$ 105

# FIG. 6

12 — SECOND CALCULATION DEVICE $\quad X_1$

111 $\quad$ 112

11 — FIRST CALCULATION DEVICE $\quad X_1$

130 $\quad$ 131

140

44 — APPARATUS CONTROL DEVICE

141

21 — MOTOR CONTROL DEVICE

42

INVERTER

41

MOTOR

52

WHEEL

100

103 $\qquad$ 104 $\qquad$ 105

# FIG. 7

# FIG. 8

EP 3 691 113 B1

# FIG. 9

EP 3 691 113 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010243002 A
- JP 2006340480 A
- EP 3018819 A2
- US 2014093350 A1
- EP 1790838 A1